# EUROPÄISCHE PATENTSCHRIFT

(11) **EP 3 953 090 B1**
(45) Veröffentlichungstag und Bekanntmachung des Hinweises auf die Patenterteilung: **27.11.2024**
(21) Anmeldenummer: 20720378.7
(22) Anmeldetag: 08.04.2020
(51) Int. Cl.: B23D 77/02

(54) **REIBAHLE**
REAMER
ALÉSOIR

(30) Priorität: 11.04.2019 DE 102019205260
(43) Veröffentlichungstag der Anmeldung: 16.02.2022
(73) Patentinhaber: MAPAL Fabrik für Präzisionswerkzeuge Dr. Kress KG, 73431 Aalen (DE)
(72) Erfinder: KRESS, Jochen, 73430 Aalen (DE); KLASCHE, Matthias, 73441 Bopfingen (DE)
(74) Vertreter: Kordel, Mattias
(86) Internationale Anmeldenummer: PCT/EP2020/060002
(87) Internationale Veröffentlichungsnummer: WO 2020/208067

(56) Entgegenhaltungen:
- WO-A1-2013/091778
- DE-A1- 102008 058 452
- DE-A1- 102014 202 066
- DE-A1- 102016 216 926

## Beschreibung

Die Erfindung betrifft eine Reibahle.

Reibahlen werden typischerweise eingesetzt, um Bohrungen mit sehr genau definierter Geometrie und hoher Oberflächengüte herzustellen. Dabei erweisen sich mehrschneidige Reibahlen als besonders produktiv, wobei bestehende Bohrungen, seien es im Gussprozess gebildete oder durch ein anderes Werkzeug, beispielsweise einem Bohrer erzeugte, sehr schnell bearbeitet werden können. Es gibt aber auch Bohrungsoberflächen, bei denen eine hohe Glätte, wie sie typischerweise durch eine Reibahle erzeugt wird, nicht gewünscht ist. Insbesondere bei einer Bolzenbohrung an einer Pleuelstange für einen Hubkolbenmotor, die auch als kleines Auge bezeichnet wird, soll der Oberfläche eine bestimmte Oberflächenrauigkeit verliehen werden, diez höher ist als die Rauigkeit, die normalerweise mit herkömmlichen Reibahlen erzielt wird. In eine solche Bohrung wird später typischerweise ein Gleitlagerelement eingepresst, welches auf einer zu glatten Oberfläche nur unzureichenden Halt findet.

Aus der deutschen Offenlegungsschrift DE 10 2005 035 140 A1 geht eine Reibahle hervor, bei der zusätzlich zu einer fest an einem Grundkörper angeordneten Reibschneide noch ein Stichel vorgesehen ist, welcher die Oberfläche aufraut. Dabei hat sich allerdings gezeigt, dass die Standzeit eines solchen Werkzeugs unbefriedigend ist, insbesondere wenn nur ein einzelner Stichel vorgesehen wird. Weiterhin muss ein hoher Einstellaufwand betrieben werden, um den Überstand des fernab der festen Reibschneide angeordneten Stichels zu der Reibschneide genau einzustellen und damit eine definierte Oberflächenrauigkeit zu erzielen. Die bekannte Reibahle ist daher verbesserungsfähig.

DE 10 2008 058452 A1 und DE 10 2016 216926 A1 offenbaren Reibahlen gemäß dem Oberbegriff des Anspruchs 1.

Der Erfindung liegt die Aufgabe zugrunde, eine Reibahle zu schaffen, wobei die genannten Nachteile nicht auftreten.

Die Aufgabe wird gelöst, indem die vorliegende technische Lehre des unabhängigen Anspruchs bereitgestellt wird. Erfindungsgemäß wird eine Reibahle geschaffen, die einen Grundkörper sowie wenigstens eine an dem Grundkörper angeordnete Messerplatte aufweist. Die Messerplatte weist eine Reibstufe auf, sowie in einem Abstand zu der Reibstufe eine Aufraustufe mit wenigstens einer Aufrauschneide. Die wenigstens eine Aufrauschneide steht über die Reibstufe um einen bestimmten Überstand hinaus vor. Auf diese Weise können die Aufraustufe und die Reibstufe in einem insbesondere im Vergleich zum Stand der Technik geringem Abstand zueinander angeordnet werden, und es ist möglich, auch die Aufraustufe fest relativ zu dem Grundkörper und insbesondere relativ zu der Reibstufe anzuordnen, sodass ein Einstellaufwand minimal ist oder sogar ganz entfällt. Da eine Vielzahl von Reibstufen an einer Vielzahl von Messerplatten vorgesehen sind, werden in besonders einfacher Weise zugleich eine Vielzahl von Aufraustufen vorgesehen, sodass der Verschleiß der einzelnen Aufraustufen vorteilhaft reduziert ist. Es wird so ein Werkzeug bereitgestellt, welches eine bestimmte Oberflächenrauigkeit mit hoher Standzeit mit geringem oder sogar ganz ohne Einstellaufwand erzeugen kann.

Die Reibstufe ist insbesondere eine geometrisch definierte Reibstufe. Insbesondere ist die Reibstufe bevorzugt an einer Stirnseite der Reibahle, insbesondere einer Stirnseite des Grundkörpers, angeordnet. Die Reibstufe weist bevorzugt in für sich genommen bekannter Weise eine geometrisch definierte Hauptschneide auf, die sich insbesondere als Schnittkante zwischen einer Spanfläche und einer Freifläche ergibt, insbesondere einer Spanfläche und einer Hauptfreifläche. Sie weist außerdem bevorzugt in ebenfalls für sich genommen bekannter Weise eine geometrisch definierte Nebenschneide auf, die sich insbesondere als Schnittkante zwischen der Spanfläche und einer Nebenfreifläche ergibt. Die Reibstufe ist insbesondere eingerichtet zur spanenden Feinbearbeitung eines Werkstücks, insbesondere zur spanenden Feinbearbeitung von Bohrungen. Bevorzugt ist die Nebenfreifläche bereichsweise rundgeschliffen. In diesem Fall schließt sich unmittelbar an die der Nebenfreifläche zugeordnete Nebenschneide eine Rundschlifffase als erster Nebenfreiflächenbereich an, an den sich wiederum ein entgegen einer Bearbeitungsrichtung abfallender Bereich als zweiter Nebenfreiflächenbereich anschließt. Je nach verwendeter Nomenklatur ist es auch möglich, dass dieser zweite Nebenfreiflächenbereich als eigentliche Nebenfreifläche bezeichnet wird.

Die Aufraustufe ist insbesondere in einem endlichen, das heißt von 0 verschiedenen Abstand zu der Reibstufe angeordnet. Insbesondere ist die Aufraustufe in einem axialen Abstand, also in Axialrichtung gemessenen Abstand, zu der Reibstufe angeordnet. Die Aufraustufe eilt somit der Reibstufe in Vorschubrichtung der Reibahle nach.

Die Axialrichtung erstreckt sich insbesondere in Vorschubrichtung der Reibahle relativ zu einem durch die Reibahle bearbeiteten Werkstück. Vorzugsweise entspricht die Axialrichtung einer Symmetrieachse der Reibahle. Vorzugsweise entspricht die Axialrichtung einer Rotationsachse der Reibahle, wenn zur Bearbeitung des Werkstücks die Reibahle gedreht wird. Es ist aber auch möglich, dass zur Bearbeitung des Werkstücks das Werkstück gedreht und die Reibahle stillgehalten oder zusätzlich relativ zu dem Werkstück gedreht wird. In diesem Fall fällt die Axialrichtung vorzugsweise mit der Rotationsachse des Werkstücks zusammen. Eine radiale Richtung steht senkrecht auf der Axialrichtung. Eine Umfangsrichtung umgreift die Axialrichtung konzentrisch.

Die Aufrauschneide ist bevorzugt als geometrisch definierte Schneide ausgebildet. Insbesondere ist sie bevorzugt gebildet als Schnittlinie einer Aufrau-Spanfläche mit einer Aufrau-Freifläche. Es ist möglich, dass auch die Aufrau-Freifläche eine Rundschlifffase aufweist und somit - wie oben in Zusammenhang mit der Haupt- und Nebenschneide erläutert - in einen ersten Aufrau-Freiflächenbereich und einen zweiten Aufrau-Freiflächenbereich geteilt ist. An die Rundschlifffase schließt sich dann - wie oben erläutert - entgegen der Bearbeitungsrichtung, die vorzugsweise der Rotationsrichtung der Reibahle relativ zu dem Werkstück entspricht - der abfallende Bereich als zweiter Aufrau-Freiflächenbereich an.

Insbesondere steht die Aufrauschneide in radialer Richtung über die Reibstufe über. Sie ist also angeordnet und eingerichtet, um in eine durch die Reibstufe bearbeitete Werkstoffoberfläche eine bestimmte Rauigkeit einzubringen, also zusätzlich zu der Reibstufe Material von der Werkstückoberfläche abzutragen.

Bevorzugt ist die Messerplatte - mit der Reibstufe und der Aufraustufe - einstückig ausgebildet, insbesondere materialeinheitlich. Auf diese Weise ist besonders vorteilhaft die geometrische Relativlage zwischen der Aufraustufe und der Reibstufe fest definiert.

Gemäß einer Weiterbildung der Erfindung ist vorgesehen, dass der bestimmte Überstand der Aufraustufe über die Reibstufe von mindestens 5 µm bis höchstens 15 µm, vorzugsweise von mindestens 6 µm bis höchstens 12 µm, vorzugsweise 8 µm, beträgt. Insbesondere auf diese Weise kann in die durch die Reibstufe bearbeitete Werkstoffoberfläche eine bestimmte Oberflächenrauigkeit eingebracht werden, die in bevorzugter Ausgestaltung besonders geeignet ist als Oberflächenrauigkeit für die Oberfläche eines kleinen Pleuelauges. Insbesondere kann in den hier definierten Überstandsbereichen eine gemittelte Rautiefe R_{z} von bevorzugt mindestens 5 µm bis höchstens 20 µm, vorzugsweise von mindestens 7 µm bis höchstens 12 µm, vorzugsweise von mindestens 8 µm bis höchstens 10 µm, vorzugsweise 8 µm, erzeugt werden.

Gemäß einer Weiterbildung der Erfindung ist vorgesehen, dass die Reibstufe unmittelbar an einer Stirnseite der Messerplatte angeordnet ist, wobei die Aufraustufe in einem Abstand von mindestens 3 mm bis höchstens 4 mm, vorzugsweise von 3,5 mm, von der Stirnseite der Messerplatte beabstandet angeordnet ist. Diese Werte erlauben zum einen eine optimale Fertigung einerseits der Reibstufe und andererseits der Aufraustufe und zum anderen eine optimierte Oberflächenbearbeitung. Der Abstand wird insbesondere von der Stirnseite bis zu einer ersten Aufrauschneide der Aufraustufe gemessen. Dies ist zugleich der Abstand der Aufraustufe von der Reibstufe.

Gemäß einer Weiterbildung der Erfindung ist vorgesehen, dass die Aufraustufe wenigstens einen Aufrauzahn aufweist, an dem die Aufrauschneide angeordnet, vorzugsweise ausgebildet ist. Mittels des Aufrauzahns kann in besonders effizienter Weise eine Aufrauung der Werkstückoberfläche erzielt werden. Der Aufrauzahn weist bevorzugt die bereits zuvor beschriebene Geometrie der Aufrauschneide mit den bereits erläuterten Flächen, nämlich Aufrau-Spanfläche, Aufrau-Freifläche sowie bevorzugt Rundschlifffase, auf.

Gemäß einer Weiterbildung der Erfindung ist vorgesehen, dass die Aufraustufe eine Mehrzahl von Aufrauschneiden aufweist, wobei die Aufrauschneiden in einem bestimmten Aufrauabstand zueinander angeordnet oder versetzt sind. Der Aufrauabstand ist insbesondere endlich, das heißt größer als 0. Insbesondere handelt es sich um einen in Axialrichtung gemessenen Aufrauabstand. Die Aufrauschneiden sind insbesondere paarweise voneinander durch den bestimmten Aufrauabstand beabstandet oder zueinander versetzt. Sie folgen also sequentiell in Axialrichtung gesehen in dem Aufrauabstand hintereinander. Insbesondere weist die Aufraustufe eine Mehrzahl von Aufrauzähnen auf, wobei die Aufrauzähne in dem bestimmten Aufrauabstand zueinander angeordnet oder versetzt sind. Bevorzugt weist die Aufraustufe pro Aufrauzahn eine Aufrauschneide auf. An jedem Aufrauzahn ist also genau eine Aufrauschneide angeordnet oder ausgebildet; umgekehrt ist jeder Aufrauschneide genau ein Aufrauzahn zugeordnet.

Gemäß einer Weiterbildung der Erfindung ist vorgesehen, dass der wenigstens eine Aufrauzahn eine Zahnbreite von mindestens 0,08 mm bis höchstens 0,2 mm, vorzugsweise von mindestens 0,09 mm bis höchstens 0,15 mm, vorzugsweise 0,1 mm, aufweist. Die Zahnbreite ist vorzugsweise die in Axialrichtung gemessene Breite an der radial am weitesten vorstehenden Stelle des Aufrauzahns, das heißt insbesondere die in Axialrichtung gemessene Länge der Aufrauschneide. Insbesondere mit den hier bestimmten Werten für die Zahnbreite können besonders gute Ergebnisse beim Aufrauen einer Werkstückoberfläche erzielt werden.

Gemäß einer Weiterbildung der Erfindung ist vorgesehen, dass der bestimmte Aufrauabstand von mindestens 0,4 mm bis höchstens 0,8 mm, vorzugsweise 0,6 mm beträgt. Es hat sich herausgestellt, dass in diesem Bereich des Aufrauabstands besonders gute Bearbeitungsergebnisse erzielt werden können. Der Aufrauabstand wird vorzugsweise insbesondere festgelegt als Verhältnis eines vorbestimmten Vorschubs der Reibahle pro Umdrehung relativ zu dem Werkstück zur Anzahl der Aufrauzähne einer Aufraustufe. Auf diese Weise wird gewährleistet, dass durch voraneilende Aufrauzähne erzeugte Oberflächenstrukturen nicht durch nacheilende Aufrauzähne zerstört werden. Insbesondere erfolgt die Aufrauung dann in Form einer in das Werkzeug eingebrachten Schraubenlinie oder Aufrauhelix, vorzugsweise mit einer Steigung von 0,4 bis 0,8 mm pro Umdrehung, vorzugsweise 0,6 mm pro Umdrehung (mm/U).

Gemäß einer Weiterbildung der Erfindung ist vorgesehen, dass die Aufrauzähne der Aufraustufe, insbesondere alle Aufrauzähne der Aufraustufe, eine gleiche, insbesondere identische, Geometrie aufweisen. Dies hat sich für die Bearbeitung der Werkstückoberfläche als besonders vorteilhaft herausgestellt.

Gemäß einer Weiterbildung der Erfindung ist vorgesehen, dass die wenigstens eine Messerplatte starr, vorzugsweise unlösbar, an dem Grundkörper befestigt ist. Dabei wird unter einer unlösbaren Befestigung eine Befestigung an dem Grundkörper verstanden, die nicht ohne nicht bestimmungsgemäß vorgesehene Gewaltanwendung, insbesondere nicht zerstörungsfrei, gelöst werden kann. Auf diese Weise kann die Messerplatte mit besonders hoher Genauigkeit an dem Grundkörper angeordnet werden. Besonders bevorzugt ist die Messerplatte in den Grundkörper eingelötet, insbesondere hartgelötet. Insbesondere ist die Messerplatte bevorzugt in eine in dem Grundkörper hierfür vorgesehene Nut eingelötet.

Gemäß der Erfindung ist vorgesehen, dass eine Mehrzahl von Messerplatten an dem Grundkörper angeordnet ist. Die Reibahle ist also insbesondere als mehrschneidige Reibahle ausgebildet, sodass eine Bohrung sehr effizient und auch schnell bearbeitet werden kann. Die Reibahle weist außerdem eine besonders hohe Standzeit auf. Die Messerplatten sind insbesondere in Umfangsrichtung zueinander versetzt, vorzugsweise mit ungleicher Winkelteilung, an dem Grundkörper angeordnet. Vorzugsweise sind die Messerplatten alle auf gleicher axialer Höhe an dem Grundkörper angeordnet, insbesondere fluchten bevorzugt ihre Stirnseiten miteinander. Jede Messerplatte der Mehrzahl von Messerplatten weist jeweils eine Reibstufe und eine zugeordnete, in einem Abstand zu der Reibstufe angeordnete Aufraustufe auf.

Gemäß der Erfindung ist vorgesehen, dass die verschiedenen Messerplatten sich - insbesondere paarweise - in dem Abstand der jeweiligen Aufraustufe zu der jeweiligen Reibstufe, insbesondere in dem Abstand der jeweiligen Aufraustufe zu der Stirnseite der Messerplatte, unterscheiden. Insbesondere sind bevorzugt alle Messerplatten bezüglich dieses Abstands verschieden ausgebildet. Ansonsten weisen sie bevorzugt gleiche, insbesondere identische Geometrien der Reibstufe und der Aufraustufe auf. Insbesondere existiert bevorzugt eine erste Messerplatte mit einem kleinsten Abstand zwischen der Aufraustufe und der Reibstufe, von der ausgehend in Umfangsrichtung - insbesondere entgegen der Bearbeitungsrichtung - der Abstand von Messerplatte zu Messerplatte zunimmt, vorzugsweise linear. Insbesondere auf diese Weise wird gewährleistet, dass eine definierte Aufrauung der Oberfläche insbesondere in Form einer schraubenlinienförmigen Aufrauung, vorzugsweise mit einer Steigung von 0,4 bis 0,8 mm/U, vorzugsweise 0,6 mm/U, erhalten wird.

In bevorzugter Ausgestaltung weist die Reibahle sechs Messerplatten auf.

Gemäß einer Weiterbildung der Erfindung ist vorgesehen, dass an dem Grundkörper eine Schnittstelle angeordnet oder ausgebildet ist, die eingerichtet ist zur Befestigung der Reibahle, insbesondere des Grundkörpers, an einer Maschinenspindel. Die Schnittstelle kann insbesondere eingerichtet sein zum Einspannen der Reibahle in die Maschinenspindel, insbesondere kann sie als kegelförmige Schnittstelle, bevorzugt als Präzisionsschnittstelle, oder als Spannzylinder ausgebildet sein.

Gemäß einer Weiterbildung der Erfindung ist vorgesehen, dass die wenigstens eine Messerplatte Cermet oder Hartmetall aufweist, vorzugsweise aus Cermet oder Hartmetall besteht.

Vorzugsweise weisen alle Messerplatten der Reibahle Cermet und Hartmetall auf oder bestehen aus Cermet oder Hartmetall.

Es ist möglich, dass die Messerplatte eine Beschichtung aufweist, insbesondere im Bereich der Reibstufe und/oder im Bereich der Aufraustufe.

Die Erfindung wird im Folgenden anhand der Zeichnung näher erläutert. Dabei zeigen:
- Figur 1: eine Darstellung eines Ausführungsbeispiels einer Messerplatte für eine Reibahle in Draufsicht;
- Figur 2: eine Darstellung der Messerplatte gemäß Figur 1 im Querschnitt;
- Figur 3: eine Darstellung eines Ausführungsbeispiels einer Reibahle mit der Messerplatte gemäß Figur 1, und
- Figur 4: eine Darstellung einer Mehrzahl von Messerplatten für die Reibahle gemäß Figur 3.

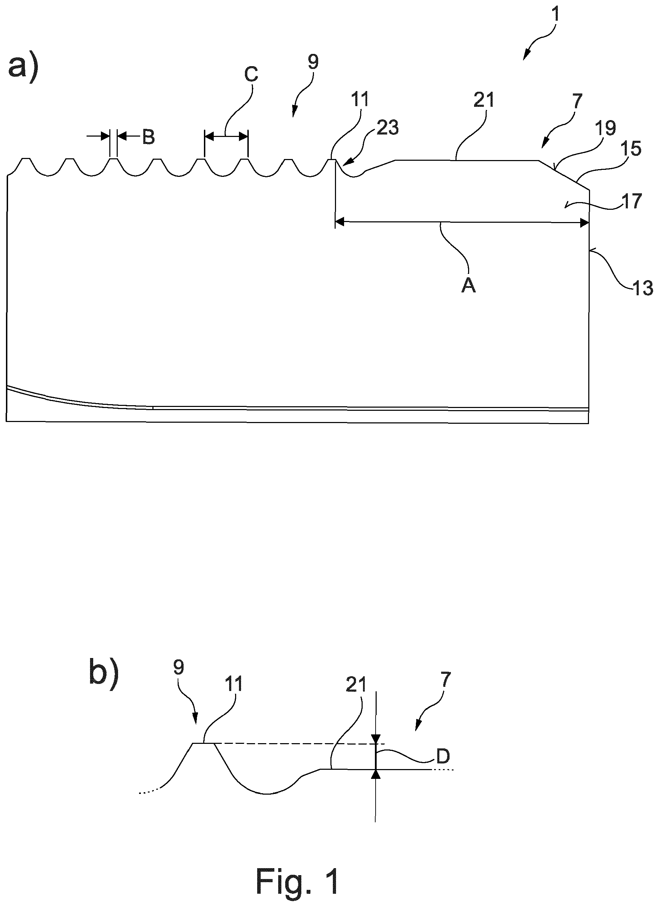

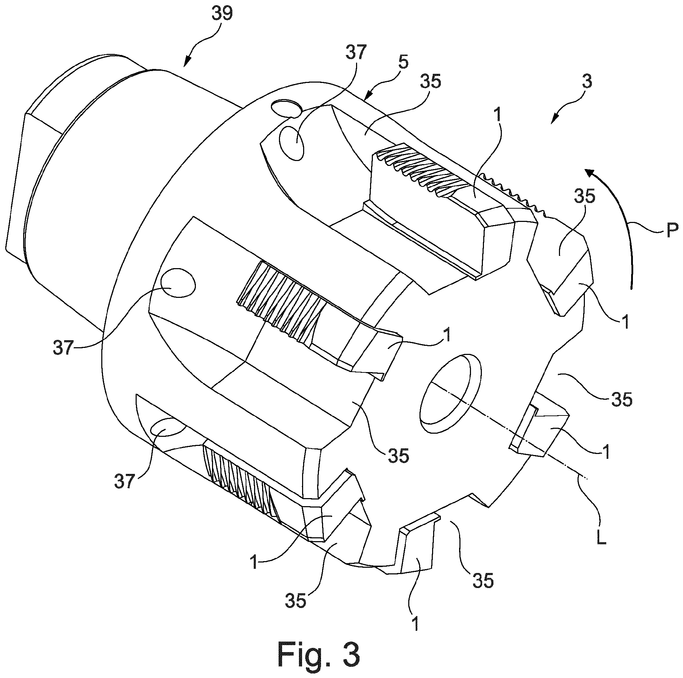

**Fig. 1** zeigt bei a) eine Darstellung in Draufsicht eines Ausführungsbeispiels einer Messerplatte 1 für ein in Figur 3 dargestelltes Ausführungsbeispiel einer Reibahle 3. Mit Bezug auf Figur 3 weist die Reibahle 3 einen Grundkörper 5 auf, an dem die Messerplatte 1 angeordnet ist. Mit Bezug auf Figur 1 weist die Messerplatte 1 eine Reibstufe 7 und in einem Abstand A zu der Reibstufe 7 eine Aufraustufe 9 mit wenigstens einer Aufrauschneide 11 auf. Bei b) ist aufgrund einer übertriebenen, nicht maßstäblichen Darstellung erkennbar, dass die Aufraustufe 9, insbesondere die Aufrauschneide 11, über die Reibstufe 7 um einen bestimmten Überstand D hinaus vorsteht.

Die Reibstufe 7 ist insbesondere eine geometrisch definierte Reibstufe. Sie weist insbesondere an einer Stirnseite 13 eine geometrisch definierte Hauptschneide 15 auf, die als Schnittkante einer Spanfläche 17 mit einer Freifläche 19 in für sich genommen üblicher Weise gebildet ist. Die Reibstufe 7 weist außerdem eine Nebenschneide 21 auf, die in analoger Weise als geometrisch definierte Schneide ausgebildet ist und sich ausgehend von der Stirnseite 13 an die Hauptschneide 15 anschließt.

Die Aufraustufe 9 ist in einem axialen, in Figur 1 in horizontaler Richtung gemessenen Abstand A zu der Reibstufe 7 angeordnet, insbesondere eilt sie der Reibstufe 7 in Vorschubrichtung der Reibahle 3 gesehen nach.

Auch die Aufrauschneide 11 ist als geometrisch definierte Schneide ausgebildet und insbesondere ebenfalls als Schnittkante der Spanfläche 17 mit einer hier nicht eigens bezeichneten Aufrau-Freifläche gebildet.

Insbesondere steht die Aufrauschneide 11 in radialer Richtung, das heißt in Figur 1 in vertikaler Richtung, um den bestimmten Überstand D über die Nebenschneide 21 hinaus.

Die Aufraustufe 9 und die Reibstufe 7 sind hier einstückig an der Messerplatte 1 ausgebildet.

Der bestimmte Überstand D beträgt bevorzugt von mindestens 5 µm bis höchstens 15 µm, vorzugsweise von mindestens 6 µm bis höchstens 12 µm, vorzugsweise 8 µm.

Die Reibstufe 7 ist insbesondere unmittelbar an der Stirnseite 13, das heißt unmittelbar an die Stirnseite 13 anschließend angeordnet, wobei die Aufraustufe 9 - wie bei a) dargestellt - in dem Abstand A von der Stirnseite 13 angeordnet ist, wobei der Abstand A in axialer Richtung, das heißt in Figur 1 in horizontaler Richtung gemessen ist und vorzugsweise von mindestens 3 mm bis höchstens 4 mm, vorzugsweise 3,5 mm, beträgt. Insbesondere wird der Abstand A gemessen von der Stirnseite 13 bis zu dem Beginn einer ersten - voll ausgebildeten - Aufrauschneide 11 der Reibstufe 9.

Die Aufraustufe 9 weist wenigstens einen Aufrauzahn 23 auf, hier eine Mehrzahl von Aufrauzähnen 23, von denen der besseren Übersichtlichkeit wegen nur einer mit dem Bezugszeichen 23 bezeichnet ist, wobei die Aufrauschneide 11 an dem Aufrauzahn 23 ausgebildet ist. Insbesondere ist an jedem Aufrauzahn 23 eine Aufrauschneide 11 gebildet. Insbesondere weist also die Aufraustufe 9 eine Mehrzahl von Aufrauschneiden 11 auf, wobei die Aufrauschneiden 11 sowie auch die Aufrauzähne 23 in einem bestimmten Aufrauabstand C zueinander angeordnet sind, insbesondere paarweise in Axialrichtung um den Aufrauabstand C zueinander versetzt. Der Aufrauabstand C wird dabei ebenfalls in axialer Richtung, das heißt in Figur 1 in horizontaler Richtung jeweils von einem Punkt an einem ersten Aufrauzahn 23 bis zu einem analogen Punkt an einem zweiten, unmittelbar nachfolgenden Aufrauzahn 23 gemessen.

Der Aufrauabstand C beträgt bevorzugt von mindestens 0,4 mm bis höchstens 0,8 mm, vorzugsweise 0,6 mm.

Die Aufrauzähne 23 weisen jeweils eine - bevorzugt identische - Zahnbreite B auf, die bevorzugt von mindestens 0,08 mm bis höchstens 0,2 mm, vorzugsweise von mindestens 0,09 bis höchstens 0,15 mm, vorzugsweise 0,1 mm beträgt.

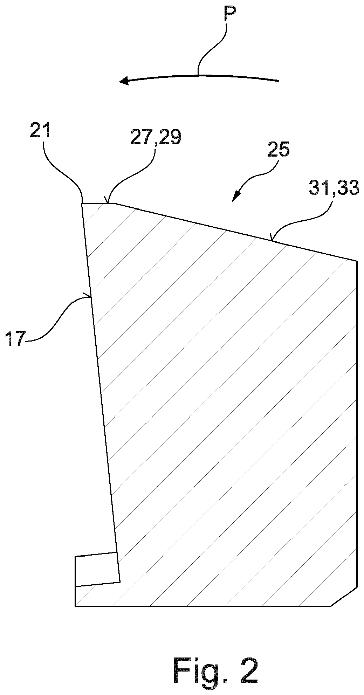

**Fig. 2** zeigt eine Querschnittsdarstellung der Messerplatte 1 gemäß Figur 1, wobei der Querschnitt auf axialer Höhe der Nebenschneide 21 angeordnet ist. Dabei wird hier deutlich, dass die Nebenschneide 21 als Schnittkante der Spanfläche 17 mit einer Nebenfreifläche 25 gebildet ist. Die Nebenfreifläche 25 weist hier zwei Nebenfreiflächenbereiche auf, nämlich unmittelbar an die Nebenschneide 21 anschließend eine Rundschlifffase 27 als ersten Nebenfreiflächenbereich 29, und einen an die Rundschlifffase 27 anschließenden, entgegen einer Bearbeitungsrichtung abfallenden Bereich 31 als zweiten Nebenfreiflächenbereich 33. Die Bearbeitungsrichtung ist dabei in Figur 2 durch einen Pfeil P dargestellt. Die Rundschlifffase 27 dient in für sich genommen bekannter Weise einer Abstützung und Führung der Reibahle 3 in einer bearbeiteten Bohrung. Die hier in Zusammenhang mit der Nebenschneide 21 erläuterte Geometrie ist in analoger Weise bevorzugt auch an der wenigstens einen Aufrauschneide 11, vorzugsweise an jeder Aufrauschneide 11 der Mehrzahl von Aufrauschneiden 11, vorgesehen. Auch diese Schneiden weisen also jeweils eine Freifläche auf, die in zwei Freiflächenbereiche geteilt ist, von denen der eine als Rundschlifffase und der andere als abfallender Bereich ausgebildet ist.

Bevorzugt weisen alle Aufrauzähne 23 der Aufraustufe 9 eine gleiche, insbesondere identische Geometrie auf.

**Fig. 3** zeigt eine Darstellung der Reibahle 3 mit der an dem Grundkörper 5 befestigten Messerplatte 1, wie bereits zuvor erläutert. Insbesondere ist die Messerplatte 1 starr, insbesondere unlösbar, an dem Grundkörper 5 befestigt, vorzugsweise in den Grundkörper 5 eingelötet. Hierzu ist in den Grundkörper 5 bevorzugt eine Nut 35 eingebracht, in welche die Messerplatte 1 eingelötet ist. Besonders bevorzugt ist die Messerplatte 1 an den Grundkörper 5 hartgelötet beziehungsweise in den Grundkörper 5 hartgelötet.

Die Reibahle 3 weist eine Mehrzahl von Messerplatten 1, hier sechs Messerplatten 1 auf, die in Umfangsrichtung der Reibahle 1 gesehen versetzt zueinander auf gleicher axialer Höhe an dem Grundkörper 5 angeordnet sind. Insbesondere fluchten die Stirnseiten 13 der Messerplatten 1 miteinander. Die Messerplatten 1 sind bevorzugt in ungleicher Winkelteilung entlang des Umfangs an dem Grundkörper 5 angeordnet. Die Messerplatten 1 unterscheiden sich bevorzugt - insbesondere paarweise - in dem bestimmten Abstand A, in dem die Aufraustufe 9 von der jeweiligen Stirnseite 13 der jeweiligen Messerplatte 1 beabstandet angeordnet ist. Im Übrigen sind die Messerplatten 1 bevorzugt gleich, insbesondere identisch ausgebildet. Insbesondere weisen die Messerplatten 1 bevorzugt im Übrigen eine gleiche Geometrie der Aufraustufe 9 und vorzugsweise auch der Reibstufe 7 auf.

Die Axialrichtung der Reibahle 3 erstreckt sich entlang einer Mittellängsachse L. Diese entspricht zugleich der Axialrichtung der Messerplatten 1. Die radiale Richtung steht senkrecht auf der Axialrichtung und damit auf der Mittellängsachse L, die Umfangsrichtung umgreift die Mittellängsachse L konzentrisch.

Jeder Messerplatte 1 ist bevorzugt eine Nut 35 an dem Grundkörper 5 zugeordnet, in welcher die Messerplatte 1 angeordnet ist. Die Nuten 35 bilden bevorzugt zugleich Spanräume für die Messerplatten 1.

In Figur 3 sind auch Kühl-/Schmiermittelöffnungen 37 dargestellt, wobei jeweils in eine Nut 35 eine Kühl-/Schmiermittelöffnung 37 mündet, und wobei über die Kühl-/Schmiermittelöffnungen 37 Kühl-/Schmiermittel in die Nuten 35 einleitbar ist.

An dem Grundkörper 5 ist auch eine Schnittstelle 39 zur Befestigung an einer Maschinenspindel angeordnet oder ausgebildet. Die Schnittstelle 39 ist hier als kegelförmige Schnittstelle, insbesondere als Präzisionsschnittstelle ausgebildet.

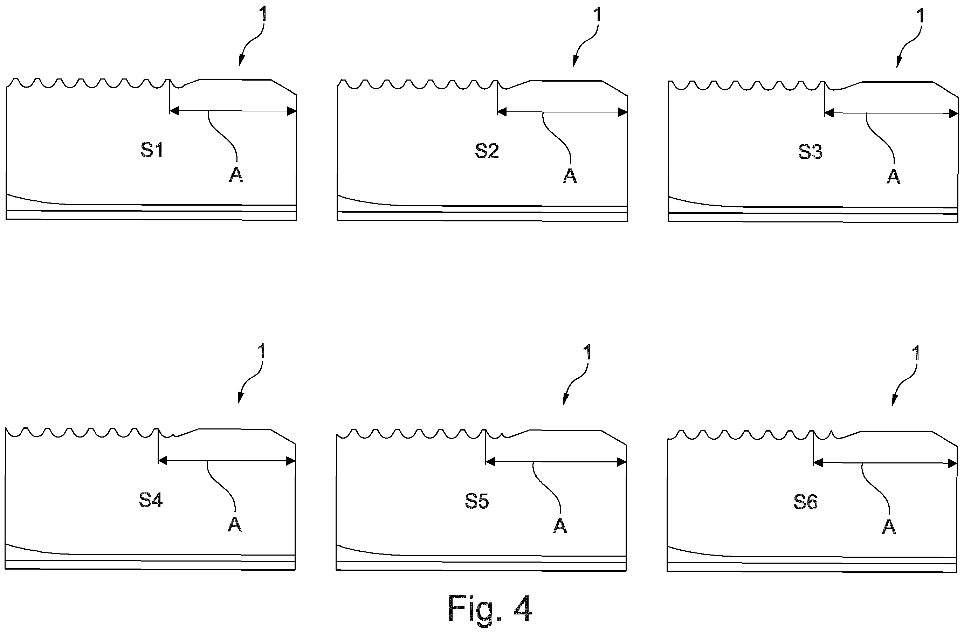

**Fig. 4** zeigt eine Darstellung der sechs Messerplatten 1 der Reibahle 3 gemäß Figur 3. Dabei sind die verschiedenen Messplatten in der Reihenfolge, in der sie entgegen der in Figur 3 durch den Pfeil P angedeuteten Bearbeitungsrichtung, welche bevorzugt die Umdrehungsrichtung der Reibahle 3 ist, an dem Grundkörper 5 angeordnet sind, mit S1, S2, S3, S4, S5 und S6 bezeichnet. In dieser Reihenfolge folgen sie entgegen der Bearbeitungs- oder Umdrehungsrichtung der Reibahle 3 aufeinander. Der Abstand A nimmt dabei ausgehend von der ersten Messerplatte S1 entgegen der Bearbeitungsrichtung P von Messerplatte zu Messerplatte - vorzugsweise linear - zu.

Die Messerplatten 1 sind bevorzugt aus Cermet oder Hartmetall gebildet. Es ist möglich, dass die Messerplatten 1 zumindest im Bereich von einer Schneide, ausgewählt aus der Hauptschneide 15, der Nebenschneide 21, und der wenigstens einen Aufrauschneide 11, beschichtet sind.

## Patentansprüche

1. Reibahle (3), mit
- einem Grundkörper (5) und
- wenigstens einer an dem Grundkörper (5) angeordneten Messerplatte (1), wobei
- die Messerplatte (1) eine Reibstufe (7) aufweist, wobei
- die Messerplatte (1) in einem Abstand (A) zu der Reibstufe (7) eine Aufraustufe (9) mit wenigstens einer Aufrauschneide (11) aufweist, wobei die wenigstens eine Aufrauschneide (11) über die Reibstufe (7) um einen bestimmten Überstand (D) hinaus vorsteht, wobei
- eine Mehrzahl von Messerplatten (1) an dem Grundkörper (5) angeordnet ist, **dadurch gekennzeichnet, dass**
- die verschiedenen Messerplatten (1) sich in dem Abstand (A) unterscheiden, in dem die Aufraustufe (9) zu der Reibstufe (7) versetzt angeordnet ist.

2. Reibahle (3) nach Anspruch 1, **dadurch gekennzeichnet, dass** der bestimmte Überstand (D) von wenigstens 5 µm bis höchstens 15 µm, vorzugsweise von wenigstens 6 µm bis höchstens 12 µm, vorzugsweise 8 µm, beträgt.

3. Reibahle (3) nach einem der vorhergehenden Ansprüche, **dadurch gekennzeichnet, dass** die Reibstufe (7) unmittelbar an einer Stirnseite (13) der Messerplatte (1) angeordnet ist, wobei die Aufraustufe (9) in einem Abstand (A) von mindestens 3 mm bis höchstens 4 mm, vorzugsweise 3,5 mm, von der Stirnseite (13) angeordnet ist.

4. Reibahle (3) nach einem der vorhergehenden Ansprüche, **dadurch gekennzeichnet, dass** die Aufraustufe (9) wenigstens einen Aufrauzahn (23) aufweist, an dem die Aufrauschneide (11) angeordnet ist.

5. Reibahle (3) nach einem der vorhergehenden Ansprüche, **dadurch gekennzeichnet, dass** die Aufraustufe (9) eine Mehrzahl von Aufrauschneiden (11), insbesondere eine Mehrzahl von Aufrauzähnen (23), aufweist, wobei die Aufrauschneiden (11), insbesondere die Aufrauzähne (23), in einem bestimmten Aufrauabstand (C) zueinander angeordnet sind.

6. Reibahle (1) nach einem der vorhergehenden Ansprüche, **dadurch gekennzeichnet, dass** der wenigstens eine Aufrauzahn (23) eine Zahnbreite (B) von mindestens 0,08 mm bis höchstens 0,2 mm, vorzugsweise von mindestens 0,09 mm bis höchstens 0,15 mm, vorzugsweise 0,1 mm, aufweist.

7. Reibahle (3) nach Anspruch 5, **dadurch gekennzeichnet, dass** der bestimmte Aufrauabstand (C) von mindestens 0,4 mm bis höchstens 0,8 mm, vorzugsweise 0,6 mm beträgt.

8. Reibahle (3) nach einem der Ansprüche 5 oder 7, **dadurch gekennzeichnet, dass** die Aufrauzähne (23) der Aufraustufe (9) eine gleiche Geometrie aufweisen.

9. Reibahle (3) nach einem der vorhergehenden Ansprüche, **dadurch gekennzeichnet, dass** die wenigstens eine Messerplatte (1) starr an dem Grundkörper (5) befestigt, insbesondere in den Grundkörper (5) eingelötet ist.

10. Reibahle (3) nach einem der vorhergehenden Ansprüche, **dadurch gekennzeichnet, dass** an dem Grundkörper (5) eine Schnittstelle (39) zur Befestigung an einer Maschinenspindel angeordnet ist.

11. Reibahle (3) nach einem der vorhergehenden Ansprüche, **dadurch gekennzeichnet, dass** die Messerplatte (1) Cermet oder Hartmetall aufweist, vorzugsweise aus Cermet oder Hartmetall besteht.

## Claims

1. A reamer (3), with
- a main body (5) and
- at least one cutting tip (1) arranged on the main body (5), wherein
- the cutting tip (1) comprises a reamer section (7), wherein
- the cutting tip (1) comprises, at a distance (A) from the reamer section (7), a roughening section (9) with at least one roughening blade (11), wherein the at least one roughening blade (11) protrudes beyond the reamer section (7) by a particular projection (D), wherein
- a plurality of cutting tips (1) is arranged on the main body (5), **characterized in that**
- the different cutting tips (1) differ in the distance (A) at which the roughening section (9) is offset from the reamer section (7).

2. Reamer (3) according to claim 1, **characterized in that** the particular projection (D) is from at least 5 µm to at most 15 µm, preferably from at least 6 µm to at most 12 µm, preferably 8 µm .

3. Reamer (3) according to any of the preceding claims, **characterized in that** the reamer section (7) is arranged directly on an end face (13) of the cutting tip (1), wherein the roughening section (9) is arranged at a distance (A) of at least 3 mm to at most 4 mm, preferably 3.5 mm, from the end face (13).

4. Reamer (3) according to any of the preceding claims, **characterized in that** the roughening section (9) comprises at least one roughening tooth (23) on which the roughening blade (11) is arranged.

5. Reamer (3) according to any of the preceding claims, **characterized in that** the roughening section (9) comprises a plurality of roughening blades (11), in particular a plurality of roughening teeth (23), wherein the roughening blades (11), in particular the roughening teeth (23), are arranged at a certain roughening distance (C) from one another.

6. Reamer (1) according to any of the preceding claims, **characterized in that** the at least one roughening tooth (23) comprises a tooth width (B) of at least 0.08 mm to at most 0.2 mm, preferably from at least 0.09 mm to at most 0.15 mm, preferably 0.1 mm.

7. Reamer (3) according to claim 5, **characterized in that** the determined roughening distance (C) is at least 0.4 mm to at most 0.8 mm, preferably 0.6 mm.

8. Reamer (3) according to any of claims 5 or 7, **characterized in that** the roughening teeth (23) of the roughening section (9) comprise the same geometry.

9. Reamer (3) according to any of the preceding claims, **characterized in that** the at least one cutting tip (1) is rigidly attached to the main body (5), in particular soldered into the main body (5).

10. Reamer (3) according to any of the preceding claims, **characterized in that** an interface (39) for fastening to a machine spindle is arranged on the main body (5).

11. Reamer (3) according to any of the preceding claims, **characterized in that** the cutting tip (1) comprises cermet or cemented carbide, and preferably consists of cermet or cemented carbide.

## Revendications

1. Alésoir (3), avec
- un corps principal (5) et
- au moins une plaquette de coupe (1) disposée sur le corps principal (5),
- la plaquette de coupe (1) présentant une section de l'alésage (7),
- la plaquette de coupe (1) présentant une section de grainage (9) avec au moins un tranchant de grainage (11) à une distance (A) de la section de l'alésage (7), dans lequel l'au moins un tranchant de grainage (11) dépasse la section de l'alésage (7) d'une saillie (D) déterminée,
- une pluralité de plaquettes de coupe (1) étant disposée sur le corps principal (5), **caractérisé en ce que**
- les différentes plaquettes de coupe (1) se distinguant par la distance (A) dont la section de grainage (9) est disposée décalée par rapport à la section de l'alésage (7).

2. Alésoir (3) selon la revendication 1, **caractérisé en ce que** la saillie prédéterminée (D) est de minimum 5 µm jusqu'à maximum 15 µm, de préférence de minimum 6 µm jusqu'à maximum 12 µm, de préférence de 8 µm.

3. Alésoir (3) selon l'une des revendications précédentes, **caractérisé en ce que** la section de l'alésage (7) est disposée immédiatement sur une face avant (13) de la plaquette de coupe (1), la section de grainage (9) étant disposée à une distance (A) de minimum 3 mm à maximum 4 mm, de préférence de 3,5 mm de la face avant (13).

4. Alésoir (3) selon l'une des revendications précédentes, **caractérisé en ce que** la section de grainage (9) présente au moins une dent (23) sur laquelle est disposé le tranchant de grainage (11).

5. Alésoir (3) selon l'une des revendications précédentes, **caractérisé en ce que** la section de grainage (9) présente une pluralité de tranchants de grainage (11), en particulier une pluralité de dents (23), dans lequel les tranchants de grainage (11), en particulier les dents (23), sont disposés à une distance rugueuse (C) les uns des autres.

6. Alésoir (3) selon l'une des revendications précédentes, **caractérisé en ce que** l'au moins une dent (23) présente une largeur de dent (B) de minimum 0,08 mm à maximum 0,2 mm, de préférence de minimum 0,09 mm à maximum 0,15 mm, de préférence de 0,1 mm.

7. Alésoir (3) selon la revendication 5, **caractérisé en ce que** la distance rugueuse déterminée (C) est de minimum 0,4 mm à maximum 0,8 mm, de préférence de 0,6 mm.

8. Alésoir (3) selon l'une des revendications 5 ou 7, **caractérisé en ce que** les dents (23) de la section de grainage (9) présentent la même géométrie.

9. Alésoir (3) selon l'une des revendications précédentes, **caractérisé en ce que** l'au moins une plaquette de coupe (1) est attachée fixement au corps principal (5), en particulier est soudée dans le corps principal (5).

10. Alésoir (3) selon l'une des revendications précédentes, **caractérisé en ce qu'**une interface (39) est disposée contre le corps principal (5) en vue de fixation sur un mandrin d'une machine.

11. Alésoir (3) selon l'une des revendications précédentes, **caractérisé en ce que** la plaquette de coupe (1) présente un cermet ou un carbure, de préférence se compose de cermet ou de carbure.
